# EUROPEAN PATENT APPLICATION

(11) **EP 4 586 215 A1**
(43) Date of publication of application: **16.07.2025**
(21) Application number: 24150845.6
(22) Date of filing: 09.01.2024
(51) Int. Cl.: G06V 10/774, G06T 11/00

(54) **ACCURATE BODY KEYPOINT DETECTION USING PURELY SYNTHETIC DATA FOR WORKFLOW SUPPORT**

(71) Applicant: Koninklijke Philips N.V., 5656 AG Eindhoven (NL)
(72) Inventor: SABCZYNSKI, Jörg, Eindhoven (NL); KRUEGER, Sascha, Eindhoven (NL); MENSER, Bernd, 5656AG Eindhoven (NL); SOMMER, Karsten, Eindhoven (NL); BERGTHOLDT, Martin, Eindhoven (NL); BRUECK, Heiner Matthias, Eindhoven (NL)
(74) Representative: Philips Intellectual Property & Standards

(57) **Abstract**

The present invention relates to body keypoint detection. A synthetic training data generation method is proposed to automatically create synthetic (i.e. artificial) training data. With the proposed approach, it is possible to create a huge variety of different virtual humans with different clothes as well as different environment conditions. The synthetic training data can then be used to train neural networks that work on real data. This may create more robust and more reliable neural networks.

## Description

### FIELD OF THE INVENTION

The present invention relates to body keypoint detection, and in particular relates to a computer-implemented method for generating synthetic training data that is usable for training a data-driven model for body keypoint detection, to a computer-implemented method for body keypoint detection, and to a computer-readable storage medium.

### BACKGROUND OF THE INVENTION

Clinical workflow can be made faster by supporting technicians in setting up the patient with the help of video cameras. A necessary software tool is the accurate localization of the patient in the camera image. This can be done with the help of a data-driven model, e.g., neural networks, which must be trained on a large number of training images. It is time consuming and expensive to generate training images with real patients.

### SUMMARY OF THE INVENTION

There may be a need to improve body keypoint detection.

The object of the present invention is solved by the subject-matter of the independent claims, wherein further embodiments are incorporated in the dependent claims. It should be noted that the following described aspects of the invention apply also for the computer-implemented method for generating synthetic training data that is usable for training a data-driven model for body keypoint detection, the computer-implemented method for body keypoint detection, and the computer-readable storage medium.

According to a first aspect of the present invention, there is provided a computer-implemented method for generating synthetic training data that is usable for training a data-driven model for body keypoint detection, the method comprising:
a) providing a dataset of virtual human subjects, wherein each virtual human subject is generated by a parametric model of a human body shape, which comprises a plurality of body parameters defining a body surface and a skeleton of the virtual human subjects;
b) selecting a virtual human subject from the dataset of the virtual human subjects and generating a pose for the selected virtual human subject;
c) attaching a plurality of annotated keypoints to the body surface and/or the skeleton of the selected virtual human subject, wherein each annotated keypoint comprises a label indicative of a position of said keypoint;
d) providing at least one background image;
e) generating a virtual scene that comprises a camera, at least one light source, the at least one background image, and the selected virtual human subject with the plurality of annotated keypoints, wherein the virtual scene comprises a plurality of scene parameters defining a position and/or orientation of the selected virtual human subject relative to the camera and/or a lighting condition; and
f) providing the generated virtual scene to a training dataset that is usable for training the data-driven model for body keypoint detection.

Accordingly, a synthetic training data generation method is proposed to automatically create synthetic (i.e. artificial) training data. With the proposed approach, it is possible to create a huge variety of different virtual humans with different clothes as well as different environment conditions. The synthetic training data can then be used to train neural networks that work on real data. This may create more robust and more reliable neural networks. Additionally, synthetically producing data can potentially tackle both challenges - the effort and possibility for a variety of poses, setups, and environments in data collection. The algorithms could generate a well distributed dataset with many samples while maintaining a ground truth labelling. Furthermore, the created training datasets can be shared without privacy concerns because only synthetic humans are shown in the images.

The data-driven model may be a machine learning algorithm. The machine learning algorithm may be a deep learning algorithm, such as deep neural networks, convolutional deep neural networks, deep belief networks, recurrent neural networks, etc.

According to an exemplary embodiment of the first aspect of the present invention, step c) further comprises adding at least one graphical asset, which is visible on or in regards to the parametric model of a human body shape, to the selected virtual human subject.

Accordingly, the virtual person is further individualized by randomly adding assets, such as skin color and texture, clothes, shoes, hair, and jewelry. The result is an individual virtual person with individual assets, e.g., hair, skin color, clothes, etc.

In an example, the at least one graphical asset comprises one or more of:
- a skin color and/or a skin texture;
- an eye color and/or an eye texture;
- a cloth, a pair of shoes, hair, and/or jewelry; and
- facial hair, and/or body hair;
- tattoos, and/or tapes;
- dirt, blood, wounds, scars, sweat, and/or liquid;
- face masks
- glasses.

According to an exemplary embodiment of the first aspect of the present invention, step c) further comprises adding at least one object that hides the selected virtual human subject partially.

Accordingly, the training images are calculated from the body skin surface model by adding obstructions and calculation of the contaminated surface facing the camera. With such training data, the data-driven model may be trained to clean contaminated raw signals from typical depth-ranging sensors to obtain the actual body skin surface.

In an example, the at least one object comprises one or more of:
- an accessory required to be carried by the human subject in a medical imaging environment;
- an equipment carried by an imager operator in a medical imaging environment; and
- a moving part of an imaging system.

In an example, the lighting condition comprises one or more of:
- a quantity of the at least one light source;
- a position and/or an orientation of the at least one light source;
- a light intensity of the at least one light source; and
- a color of the at least one light source.

According to an exemplary embodiment of the first aspect of the present invention, the step of generating a pose for the selected virtual human subject comprises:
- determining, for each joint of the skeleton, an anatomically possible range of motion; and
- generating, within a constraint of the anatomically possible range of motion of each joint of the skeleton, an actual joint angle for one or more joints of the skeleton randomly to generate the pose of the selected virtual human subject.

Accordingly, the pose of the virtual person is now individualized. The pose may be generated by changing the joint angles of the underlying skeleton and thus the angles of the bones relative to each other. For example, a set of joint angles for each joint in the skeleton may be chosen randomly. The surface mesh as well as the assets are then deformed accordingly.

According to an exemplary embodiment of the first aspect of the present invention, the actual joint angle for one or more joints of the skeleton is generated randomly with a uniform distribution.

Accordingly, to generate the poses of the virtual persons, for each joint of the underlying skeleton the anatomically possible range of motion has been determined. Within the constraints of these ranges of motion the actual joint angle has been determined randomly with a uniform distribution. This approach may allow to sample the space of anatomically possible poses completely.

According to an exemplary embodiment of the first aspect of the present invention, in step c) the generated pose comprises one or more typical poses of a human subject on a scanner table in a medical imaging environment; and
wherein the actual joint angle for one or more joints of the skeleton is generated randomly with a probability distribution that has a peak around a joint position in the one or more typical poses.

Accordingly, instead of sampling uniformly in the full ranges of motion, it is possible to sample e.g. with a Gaussian distribution around the joint position in the typical pose. This increases the sampling density in the area of typical poses drastically and thus increases the predictive accuracy of the trained network for the most important poses.

According to an exemplary embodiment of the first aspect of the present invention, the body surface and/or the skeleton of the selected virtual human subject is represented at a plurality of different resolutions.

Thus, the body surface ground truth may be represented at a different resolution than the input image e.g. by corresponding body surface keypoints in 3D (e.g. knee front keypoint and corresponding knee back keypoint). The number and location of such keypoints can be chosen independently of the image resolution.

According to an exemplary embodiment of the first aspect of the present invention, the method further comprises:
- repeating steps c) to f) to provide a plurality of virtual scenes to the training dataset.

In this way, a plurality of virtual scenes can be created.

According to a second aspect of the present invention, there is provided a computer-implemented method for body keypoint detection, the method comprising:
i) providing image data acquired by at least one sensor at a clinical site;
ii) providing a data-driven model to identify at least one human subject in the provided image data, to determine one or more keypoints associated with a body surface and/or a skeleton of the at least one identified human subject, and to generate a label that describes a keypoint position of the one or more determined keypoints, wherein the data-driven model has been trained on a training dataset that comprises synthetic training data generated according to any one of the preceding claims.

The performance of the data-driven model depends most on the availability of large training data sets with high quality. With the synthetically producing data, a more robust and more reliable data-driven model is created.

According to an exemplary embodiment of the second aspect of the present invention, the method further comprises determining, based on the generated label, a body pose of the at least one identified human subject.

The body pose information may be used in the synthetic training data generating apparatus 10 to create a dataset tailored to the local conditions at the site.

According to an exemplary embodiment of the second aspect of the present invention, the method further comprises determining, based on the image data, an image characteristic of the image data.

Accordingly, it is possible to perform automatic analysis of image characteristics (e.g., lighting, noise, etc.) at the specific clinical site. These characteristics are used to guide a synthetic data simulation pipeline to create an annotated training dataset that is tailored to the local conditions at the site.

According to an exemplary embodiment of the second aspect of the present invention, the method further comprises obtaining at least one person characteristic of the at least one identified human subject.

Accordingly, it is possible to determine patient characteristics by automatic estimation of metadata such as age, gender, body shape, ethnicity, etc. This information can again be used in the synthetic training data generation apparatus to further tailor the dataset to the local patient population.

According to an exemplary embodiment of the second aspect of the present invention, the method further comprises determining, from the image data, a local exam preparation characteristic that comprises one or more of: an accessory required to be carried by the at least one human subject, an equipment carried by an imager operator, and a moving part of an imaging system.

Thus, it is possible to further analyze the local exam preparation characteristics. In particular, objects that may interfere with body keypoint detection such as blankets or MR coils can be included in the synthetic dataset pipeline.

According to an exemplary embodiment of the second aspect of the present invention, the method further comprises:
- repeating steps i) and ii) during a plurality of exam preparations to determine a plurality of body poses of one or more human subjects, a plurality of image characteristics, a plurality of person characteristics of one or more human subjects, and/or a plurality of local exam preparation characteristics; and
- generating new synthetic training data based on one or more of: the plurality of body poses of one or more human subjects, the plurality of image characteristics, the plurality of person characteristics of the one or more human subjects, and the plurality of local exam preparation characteristics, wherein the new synthetic training data is usable for re-training the data-driven model.

Accordingly, in combination with a varied set of realistic 3D models for clothing, hair, and skin variation, large annotated datasets may be synthesized. At a certain pre-determined frequency (e.g., every week), a re-training of the data-driven model is then started to optimize body keypoint detection performance at the site.

According to an exemplary embodiment of the second aspect of the present invention, the method further comprises the image data comprises depth image data that represents surface data representing an outer surface of the human subject facing the at least one sensor. The data-driven model has been trained to determine further surface data representing an outer surface of the human subject facing away from the at least one sensor.

Accordingly, even if the surface facing the camera is strongly corrupted by artifacts and reconstruction of the body skin surface, the trained data-driven model can determine further surface data representing an outer surface of the human subject facing away from the at least one sensor.

According to an exemplary embodiment of the second aspect of the present invention, the method further comprises determining a full body surface based on the surface data representing an outer surface of the human subject facing the at least one sensor and the further surface data representing an outer surface of the human subject facing away from the at least one sensor, and determining , based on the full body surface, at least one biometric parameter of the at least one identified human subject.

The biometric parameters may be used to adjust imaging parameters of a imaging scanner, such as FOV, fold-over suppression, dose/SAR, collimation, etc.

According to an exemplary embodiment of the second aspect of the present invention, the method further comprises generating, based on the full body surface and the at least one biometric parameter of the at least one identified human subject, control data usable to adjust at least one imaging parameter for acquiring a medical image of the at least one human subject.

According to an exemplary embodiment of the second aspect of the present invention, the method further comprises:
- providing the acquired medical image of the at least one human subject suing the at least one adjust imaging parameter;
- determining a deviation between the acquire medical image and the determined full body surface of the at least one identified human subject; and
- re-training the data-driven model, based on the determined deviation, to determine the further surface data representing an outer surface of the human subject facing away from the at least one sensor.

Accordingly, a feedback system is provided that analyzes the actual imaging parameters and the resulting scanning parameters and images and compares the predictions with the actual values to spot deviations. If such a deviation is found the correct parameters and the depth images can be stored, or used to re-train the data-driven model.

In some examples, there is provided a synthetic training data generating apparatus for generating synthetic training data that is usable for training a data-driven model for body keypoint detection, the synthetic training data generating apparatus comprising one or more processors configured to perform the steps of the method according to the first aspect and any associated example.

In some examples, there is provided a body keypoint detection apparatus, the body keypoint detection comprising one or more processors configured to perform the steps of the method according to the second aspect and any associated example.

According to a third aspect of the present invention, there is provided a computer-readable storage medium comprising instructions which, when the program is executed by a processing unit, cause the processing unit to carry out the steps of the method according to the first aspect and any associated example or the method according to the second aspect and any associated example.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

These and other aspects of the invention will be apparent from and elucidated with reference to the embodiment(s) described hereinafter.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the invention.
Fig. 1 illustrates a flowchart describing a computer-implemented method for generating synthetic training data that is usable for training a data-driven model for body keypoint detection.
Fig. 2 illustrates examples of virtual persons generated with this shape model.
Fig. 3 illustrates examples for different poses.
Fig. 4 illustrates a virtual person with exemplary keypoints.
Fig. 5A illustrates an exemplary computer graphics scene containing a camera, light sources, the virtual person, and a background image.
Fig 5B illustrates the virtual scene generated from Fig. 5A.
Fig. 6 illustrates a block diagram of an exemplary synthetic training data generating apparatus.
Fig. 7 illustrates a flowchart describing a computer-implemented method for body keypoint detection.
Fig. 8 illustrates a real-world dummy patient images with manually annotated keypoints.
Fig. 9 illustrates an exemplary body keypoint detection apparatus.
Fig. 10 illustrates an example of a system for automatic optimization of network performance after this deployment.
Fig. 11A illustrates a surface representation of a virtual human subject using a lower resolution.
Fig. 11B illustrates a set of corresponding 3D body surface keypoins on an irregular grid.
Fig. 12A illustrates a ground truth body skin surface calculated for the front-face and the back-face as two depth images from a virtual human subject.
Fig. 12B illustrates the output of the data-driven model using obstructed front face as input.
Fig. 13 illustrates exemplary steps towards the reconstruction of the front face despite noise and obstructions.
Fig. 14 illustrates an exemplary system with an imaging scanner.

### DETAILED DESCRIPTION OF EMBODIMENTS

In medical imaging, the clinical workflow can be made faster by supporting technicians in setting up the patient before imaging. This boosts the productivity of radiology departments while simultaneously improving staff experience and patient comfort. In order to implement workflow support, it is often necessary not only to localize objects in space, but also the patient. For this purpose, external cameras (e.g. placed above the patient table) are suitable tools.

In order to accurately localize keypoints on or in the patient such as eyes, ears, nose tip, or one of the large body joints (left/right ankle, knee, hip, shoulder, elbow, wrist, or fingers) image processing algorithms are used, which detect and localize the keypoints in the image.

Nowadays, neural networks are often used for keypoint detection and localization. These neural networks are typically trained on a large number of training images, for which the true position of the keypoints on the patient is known. Once trained, the neural network can be fed with camera images as input and gives keypoint position as output.

The typical workflow to create training images ("studio approach") is to ask volunteers to lay down onto the patient table in a setup like a real Magnetic Resonance (MR) examination room. The volunteers are asked to adopt typical poses which also appear in the real-world imaging workflow. This is a tedious, time-consuming, and costly work. Therefore, only a limited amount of training data can be generated with this approach. Unfortunately, this leads to a trained network, which cannot generalize to images, which are out of the training distribution. Alternatively, it is possible to use large databases of photos. However, persons depicted in images in these databases usually do not show the poses which are required for training a network for these dedicated purposes.

Furthermore, in a second step the reference values, which the network shall learn to extract from input images, need to be identified. The position and orientation of the object or the position of the keypoints on the object need to be identified manually, so called "ground truth labelling". For those who do the labelling, it is often difficult to determine the exact position of the keypoints, especially when they are not visible immediately on the surface (e.g. eyes, nose, ears), but are hidden in the body (e.g. hip joints). Therefore, ground truth labelling again is a time-consuming work. In addition, it is error prone and can lead to noise in the training data, which limits the performance of the so trained network. An alternative approach is to use another already existing labelling software to label the training images. However, this approach leads the network to mimicking the performance of this software without improving its performance. This approach might also have legal problems, if the training data, which was used for training the other software, cannot be used due to privacy or copyright concerns.

In order to address one or more of the above-described problems, the present disclosure provides a computer-implemented method and an apparatus for automatically creating synthetic training data for training a neural network to detect and localize persons (e.g., patients and/or operators) in camera images.

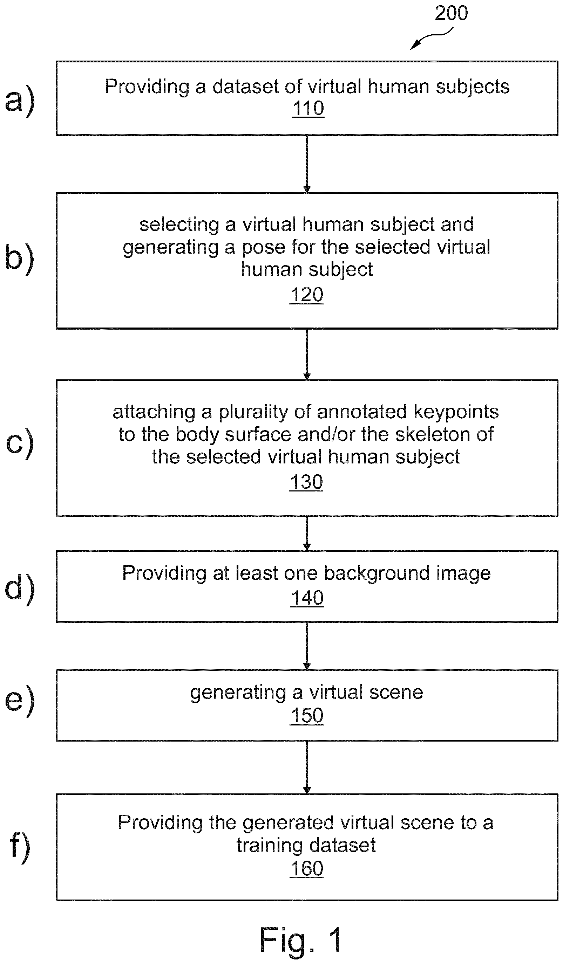

Fig. 1 illustrates a flowchart describing a computer-implemented method 100 for generating synthetic training data that is usable for training a data-driven model for body keypoint detection. The data-driven model may be a machine learning algorithm. The machine learning algorithm may be a deep learning algorithm, such as deep neural networks, convolutional deep neural networks, deep belief networks, recurrent neural networks, etc.

At block 110, i.e., step a), the method 100 comprises the step of providing a dataset of virtual human subjects. Each virtual human subject is generated by a parametric model of a human body shape, which comprises a plurality of body parameters defining a body surface and a skeleton of the virtual human subjects.

The parametric model may be randomly individualized, i.e. from the range of possible parameter values a single set of parameter values (a single value for each parameter) is chosen randomly. This completely defines the body shape of the virtual "person". Together with the outer shape, a skeleton is created, which is later on used to change the pose of the virtual person.

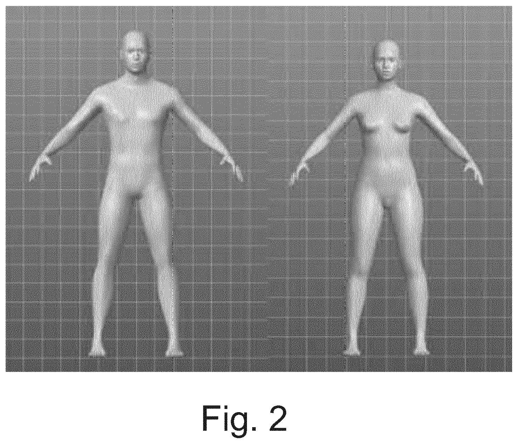

An example for a tool implementing parametric shape models is the open-source application "MakeHuman". It is possible to change general parameters such as gender, age, muscle mass, weight, height, proportions as well as ethnicity. Furthermore, it is possible to finetune certain more specific parameters related to the shape of the face and the torso and to adjust proportions of the limbs. Examples of virtual persons generated with this shape model can be found in Fig. 2, which illustrates two virtual persons having different gender, age, weight, and muscle mass. These virtual persons may comprise a surface mesh representing the body surface and a skeleton. The topology of the mesh may be always the same, and just the position of the vertices changes.

The virtual person is further individualized by randomly adding one or more graphical assets. Examples of the graphical asserts may include, but are not limited to, a skin color and/or a skin texture; an eye color and/or an eye texture; a cloth, a pair of shoes, hair, and/or jewelry; facial hair, and/or body hair; tattoos, and/or tapes; dirt, blood, wounds, Sweat, and/or liquid; face masks; and glasses.

The above steps may create a fully individualized virtual person, which may be stored in the dataset of virtual human subjects in a specific format if necessary.

Turning back to Fig. 1, at block 120, i.e., step b), the method further comprises the step of selecting a virtual human subject from the dataset of the virtual human subjects and generating a pose for the selected virtual human subject. In some implementations, the virtual human subject may be randomly selected from the dataset of the virtual human subjects. In some other implementations, filters like gender, age, weight, etc. may be provided, and the virtual human subject may be selected by applying one or more filters to the dataset of the virtual human subjects.

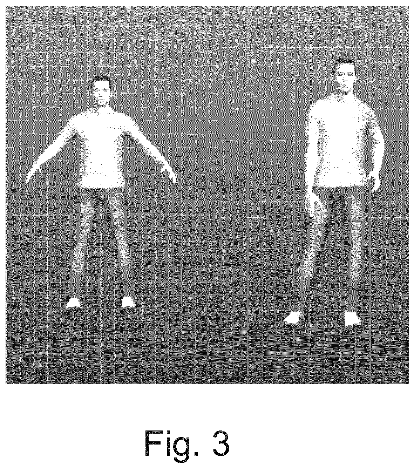

The pose of the virtual person is now individualized. The pose may be generated by changing the joint angles of the underlying skeleton and thus the angles of the bones relative to each other. For example, a set of joint angles for each joint in the skeleton may be chosen randomly. The surface mesh as well as the assets are then deformed accordingly. Examples for different poses are shown in Fig. 3, which shows an individual virtual person in two individual poses with individual assets, e.g., hair, skin color, clothes, and shoes.

Turning back to Fig. 1, at block 130, i.e., step c), the method further comprises attaching a plurality of annotated keypoints to the body surface and/or the skeleton of the selected virtual human subject. Each annotated keypoint comprises a label indicative of a position of said keypoint. The keypoints may be attached either relative to the skeleton or relative to the surface mesh representing the skin. These are the points a data-driven model will be trained to recognize.

Since the overall goal of the trained network is to detect the pose of a patient or operator in a scanner room, the data-driven model needs training data with annotated keypoints. Keypoint positions may be calculated with the approach of virtual persons.

Two different classes of keypoints may be distinguished:

### 1) Keypoints with a position relative to bones of the underlying skeleton

Such a keypoint can be a joint of the skeleton, e.g., the knee, hip, or shoulder joint. In addition, it may be any point with a fixed geometric relationship to the bones of the skeleton, e.g. a point in the middle of a bone. Since the skeleton in computer graphics is a simplified version of a human skeleton and usually consists of straight bones, but real human bones might have very complex shape, such a keypoint might be a prominent point on a bone, e.g. the greater trochanter of the femur or the iliac crest on the pelvis.

### 2) Keypoints with a position relative to the body surface

Such a keypoint has a position relative to one or more vertices of the body surface mesh. Since the body surface is influenced by shape variations (see e.g., Fig. 1) and pose variations (see e.g., Fig. 3), such a keypoint cannot be adequately attached to a bone of the skeleton. Examples for such keypoints are the mid points of the ears, the eyes, or the heels.

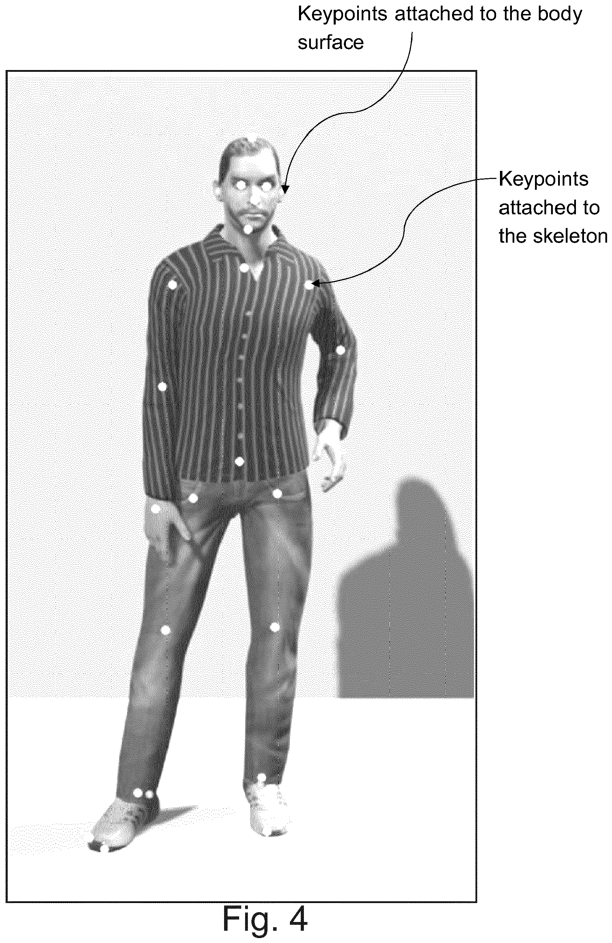

Fig. 4 illustrates a virtual person with exemplary keypoints. In this illustrated example, both keypoints attached to the skeleton and the keypoints attached to the body surface mesh are shown.

Turning back to Fig. 1, at block 140, i.e., step d), the method 100 further comprises the step of providing at least one background image. The at least one background image may be selected randomly from a database of background images.

At block 150, i.e., step e), the method 100 further comprises generating a virtual scene that comprises a camera, at least one light source, the at least one background image, and the selected virtual human subject with the plurality of annotated keypoints. The virtual scene comprises a plurality of scene parameters defining a position and/or orientation of the selected virtual human subject relative to the camera and/or a lighting condition.

Thus, a suitable virtual scene may be constructed comprising a camera, a background, light sources, and the virtual person. An example of a computer graphics software, which can be used to render the completely virtual images is Blende. In Blender, the objects to be rendered are arranged in a scene. The rendered image is taken from the perspective of the camera in the scene. The scene parameters may be selected randomly. Examples of the scene parameters may include position and orientation of the virtual person relative to the camera, the at least one background images chosen from a picture database, one or more light sources as well as their position, direction, color, and/or intensity, and colour, specularity, texture, and the like of the selected virtual person's assets.

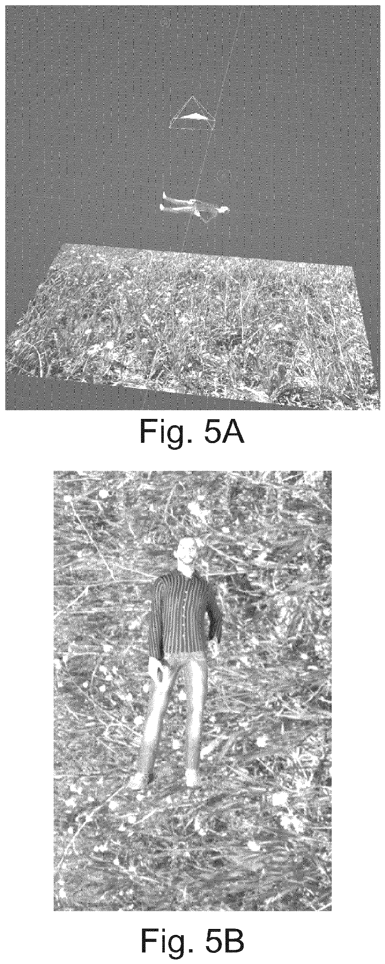

Fig. 5A illustrates an exemplary computer graphics scene made with Blendercontaining a camera (shown as a pyramid), light sources (shown as circles), the virtual person, and the background image. Fig. 5B illustrates the virtual scene generated from Fig. 5A.

Turning back to Fig. 1, at block 160, i.e., step f), the method 100 further comprises the step of providing the generated virtual scene to a training dataset that is usable for training the data-driven model for body keypoint detection. Thus, the training dataset comprises rendered virtual images plus corresponding keypoint positions.

In order to generate training images for training of a data-driven model with the goal to detect the pose of humans via keypoints, many different images together with the true keypoint positions may be created by repeating steps b) to g) to provide a plurality of virtual scenes to the training dataset. Therefore, many parameters of the scene and virtual person may be randomized. Examples of these parameters may include, but are not limited to, body shape of the virtual person, position and orientation of the virtual person in the image, skin color and texture, clothes, background image, number, position, orientation, intensity, and/or color of light source(s), additional random objects hiding the virtual person partially, surface parameters of the materials (skin, clothes), e.g. specularity, roughness, anisotropy, etc.

In some implementations, to generate the poses of the virtual persons, for each joint of the underlying skeleton the anatomically possible range of motion has been determined. Within the constraints of these ranges of motion the actual joint angle has been determined randomly with a uniform distribution. This approach may allow to sample the space of anatomically possible poses completely.

The problem of sampling the complete anatomical range of all joints is the high dimensionality of the space of joint angles. Many joints are "ball" joints and must therefore be described by three angles. Depending on the complexity of motion the underlying skeleton must model, there are easily more than 40 angles describing a single pose. It is obvious that the space of possible poses can only be sampled very sparsely. Therefore, in some implementations, typical poses of patients on the scanner table can be identified. These poses are the most important poses in real-world situations. The performance of the network on theses typical poses can be tested and if the performance on one or more of these poses is not sufficient, additional images with virtual persons in this pose can be generated. It is also possible to include a small variation of the full range of motion of the joints around these poses. Instead of sampling uniformly in the full ranges of motion, it is possible to sample e.g. with a Gaussian distribution around the joint position in the typical pose. This increases the sampling density in the area of typical poses drastically and thus increases the predictive accuracy of the trained network for the most important poses.

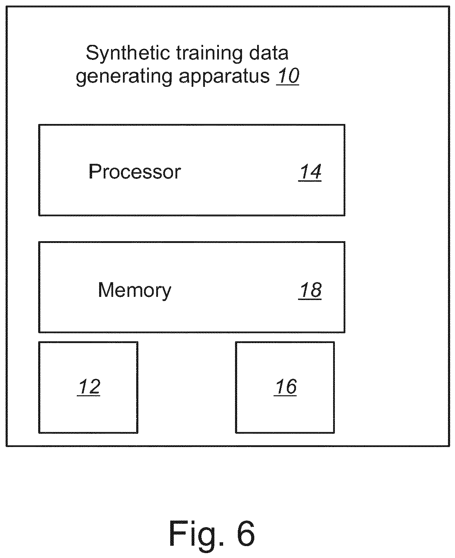

Fig. 6 illustrates a block diagram of an exemplary synthetic training data generating apparatus 10. The synthetic training data generating apparatus 10 comprises an input unit 12, a processing unit 14, and an output unit 16.

In general, the synthetic training data generating apparatus 10 may comprise various physical and/or logical components for communicating and manipulating information, which may be implemented as hardware components (e.g. computing devices, processors, logic devices), executable computer program instructions (e.g. firmware, software) to be executed by various hardware components, or any combination thereof, as desired for a given set of design parameters or performance constraints. Although Fig. 6 may show a limited number of components by way of example, it can be appreciated that a greater or a fewer number of components may be employed for a given implementation.

In some implementations, the synthetic training data generating apparatus 10 may be embodied as, or in, a device or apparatus, such as a server, workstation, or mobile device. The synthetic training data generating apparatus 10 may comprise one or more microprocessors or computer processors, which execute appropriate software. The processing unit 14 of the synthetic training data generating apparatus 10 may be embodied by one or more of these processors. The software may have been downloaded and/or stored in a corresponding memory 18, e.g. a volatile memory such as RAM or a nonvolatile memory such as flash. The software may comprise instructions configuring the one or more processors to perform the functions described herein.

It is noted that the synthetic training data generating apparatus 10 may be implemented with or without employing a processor, and also may be implemented as a combination of dedicated hardware to perform some functions and a processor (e.g. one or more programmed microprocessors and associated circuitry) to perform other functions. For example, the functional units of the synthetic training data generating apparatus 10, e.g. the input unit 12, the one or more processing units 14, and the output unit 16 may be implemented in the device or apparatus in the form of programmable logic, e.g. as a Field-Programmable Gate Array (FPGA). In general, each functional unit of the synthetic training data generating apparatus may be implemented in the form of a circuit.

In some implementations, the synthetic training data generating apparatus 10 may also be implemented in a distributed manner. For example, some or all units of the synthetic training data generating apparatus 10 may be arranged as separate modules in a distributed architecture and connected in a suitable communication network, such as a 3rd Generation Partnership Project (3GPP) network, a Long Term Evolution (LTE) network, Internet, LAN (Local Area Network), Wireless LAN (Local Area Network), WAN (Wide Area Network), and the like. The processing unit(s) 14 may execute instructions to perform the method described herein, which is explained in detail with respect to the flowchart shown in Fig. 1.

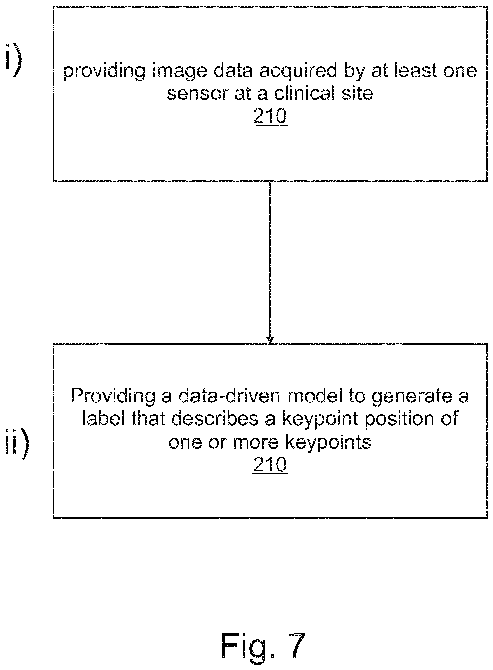

Fig. 7 illustrates a flowchart describing a computer-implemented method 200 for body keypoint detection.

At block 210, the method 200 comprises providing image data acquired by at least one sensor at a clinical site. The at least one sensor may be an optical sensor for capturing a two-dimensional image data or depth image data at the clinical site. For example, the at least one sensor may include a ceiling-mounted optical camera that provides a continuous data stream of the patient table, gantry or bore mounted cameras with sufficient view of the patient, and any combination thereof.

At block 220, the method 200 further comprises providing a data-driven model to identify at least one human subject in the provided image data, to determine one or more keypoints associated with a body surface and/or a skeleton of the at least one identified human subject, and to generate a label that describes a keypoint position of the one or more determined keypoints.

The data-driven model has been trained on a training dataset that comprises synthetic training data generated according to the method disclosed herein. The input to the training of the pose detection data-driven model includes the rendered virtual images plus the corresponding keypoint positions. In principle, many different network architectures and also output formats are possible, such as heat maps of the keypoints, image coordinates of the keypoints, bounding regions or bounding boxes, and/or even segmentations. However, since the goal of the present disclosure is to train the data-driven model on virtual training data, but apply the network to real patient data, it is recommended to use annotated real-world images for test. The annotation, i.e. identification of the keypoint coordinates, of these images may be either be done manually and/or with other automatic methods.

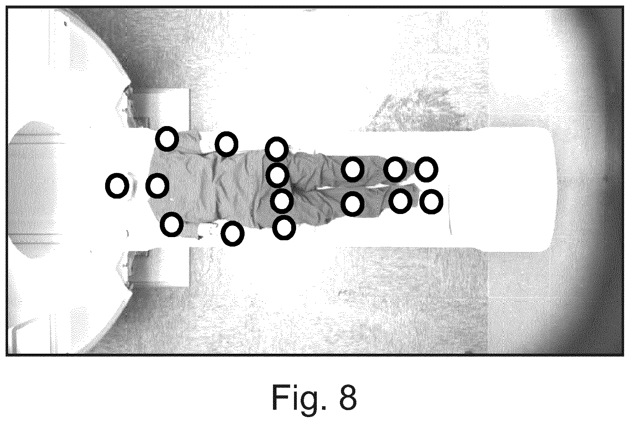

For example, Fig. 8 illustrates a real-world dummy patient images with manually annotated keypoints. In the illustrated example, the keypoints are indicated with circles. In some other examples, the keypoints may be visualized in these images in the form of "heat maps", which is normally used to visualize the probability for the joint to be located at a pixel. The heatmaps for the different joints are color coded combined into a single heat map. For better visualization, heat maps of the annotated keypoints are broadened. The position of the annotated keypoints is the maximum of the corresponding heat map.

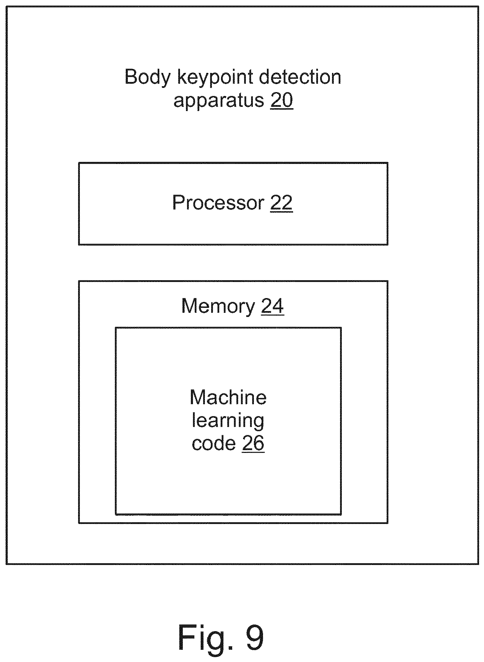

Fig. 9 illustrates an exemplary body keypoint detection apparatus 20. The exemplary body keypoint detection apparatus 20 may comprise a processor 22 and a memory 24. The processor 22 may perform a machine learning algorithm (i.e., the data-driven model) by executing code 26 embodying the algorithm. In some examples, the processor 22 may access and execute code for potentially multiple different machine learning algorithms, and may even in some cases, perform multiple algorithms in parallel. The processor 22 may include any processor or processing device, such as a microprocessor, an embedded processor, a digital signal processor (DSP), a network processor, a handheld processor, an application processor, a co-processor, a system on a chip (SOC), or other device to execute code 26. The code 26 embodying a machine learning algorithm may be stored in the memory 24, which may be local or remote to the processor 22. The memory 24 may be implemented as one or more of shared memory, system memory, local processor memory, cache memory, etc., and may be embodied as software, firmware, or a combination of software and firmware.

Neural-network-based body keypoint detection relies on the availability of a suitable annotated training dataset. As described above, diverse datasets with varying personal appearance, body poses, image background, etc. are created and used during training to ensure general applicability of the network. In some implementations, after deployment of the camera-based system at a clinical site, however, only a small part of this variability will be observed: the images acquired at a specific site usually have a very similar image content and lighting conditions. In addition, the body poses observed at a specific site will typically be only a small subset of all poses seen by the network during training. Consequently, the trained data-driven model may not be optimized for this data subset, and potentially show sub-optimal performance while at the same time having high but unused capacity reserve which deteriorates training stability and time effort.

Here a system is described to overcome this limitation by automatic generation of site-specific synthetic datasets, followed by re-training to obtain the data-driven model optimized for the local conditions.

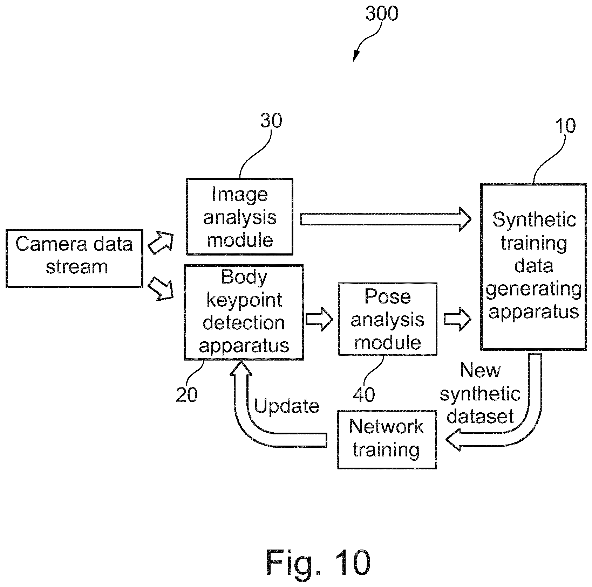

Fig. 10 illustrates an example of a system 300 for automatic optimization of network performance after this deployment. As will be explained hereinafter, the system 300 realizes continuous improvement of camera-based workflow support algorithms after deployment. It is based on automatic analysis of image characteristics (e.g., lighting, noise) as well as body pose distribution at the specific clinical site. These characteristics are used to guide a synthetic data simulation pipeline to create an annotated training dataset that is tailored to the local conditions at the site. Finally, a body keypoint detection data-driven model is (re-)trained using this synthetic dataset to automatically improve performance over time.

The system 300 comprises the synthetic training data generating apparatus 10, the body keypoint detection apparatus 20, an image analysis module 30, and a pose analysis module 40.

The synthetic training data generating apparatus 10 is configured to generating synthetic training data that is usable for training a data-driven model for body keypoint detection.

The body keypoint detection apparatus 20 is configured to identify at least one human subject in the provided image data, to determine one or more keypoints associated with a body surface and/or a skeleton of the at least one identified human subject, and to generate a label that describes a keypoint position of the one or more determined keypoints.

The image analysis module 30 is configured to extract typical image characteristics such as lighting conditions, noise distribution, etc.

The pose analysis module 40 is configured to analyze the output of the body keypoint detection apparatus 20 to obtain information about the distribution of patient body poses during exam preparation.

In operation, the camera's data stream during the continuous utilization of the workflow support system at the clinical site is analyzed by the image analysis module 30 to extract typical image characteristics such as lighting conditions, noise distribution, etc. The body keypoint detection apparatus 20 may be routinely used to determine anatomical keypoint locations. The output of the body keypoint detection apparatus 20 is analyzed by the pose analysis module 40 to obtain information about the distribution of patient body poses during exam preparation. This distribution may vary between clinical sites due to differences in exam types (e.g., scanned anatomies) as well as working styles. Many implementations of this pose analysis module are possible. One example is a Gaussian mixture model (GMM) to approximate the distribution of detected anatomical keypoint coordinates. The gathered information on image characteristics and body pose distribution is then used in the synthetic training data generating apparatus 10 to create a dataset tailored to the local conditions at the site. To this end, the parametrized human body model as well as a three-dimensional (3D) graphics software is used. In combination with a varied set of realistic 3D models for clothing, hair, and skin variation, large annotated datasets may be synthesized. Details about this synthetic image generation procedure have been described above with respect to the flowchart in Fig. 1. At a certain pre-determined frequency (e.g., every week), a re-training of the data-driven model is then started to optimize body keypoint detection performance at the site. After training, the data-driven model is evaluated on a pre-defined test dataset to avoid any performance loss compared to the original network. Once this test is passed, the body keypoint detection data-driven model used in the workflow support system is automatically updated. For sites with similar exam type distributions, the created datasets can be shared without privacy concerns because only synthetic humans are shown in the images. Detected body keypoint locations during exam preparation can be logged without privacy concerns. The synthetic data simulation pipeline can also use these keypoint locations directly, thereby re-creating actual exam preparation scenes with synthetic humans.

In some implementations, the system 300 may further comprise a patient analysis module (not shown) configured to determine patient characteristics by automatic estimation of metadata such as age, gender, body shape, ethnicity, etc. This information can again be used in the synthetic training data generation apparatus 10 to further tailor the dataset to the local patient population.

In some implementations, the system 300 may further comprise a local exam analysis module (not shown) with object detection algorithms used to further analyze the local exam preparation characteristics, such as an accessory required to be carried by the at least one human subject, an equipment carried by an imager operator, and/or a moving part of an imaging system. For example, accessories that may interfere with body keypoint detection such as blankets or MR coils can be included in the synthetic dataset pipeline.

In some implementations, camera frames with challenging scenes (i.e., high uncertainty in the network output) are automatically stored during the clinical routine. The parameters of the synthetic data simulation pipeline are then automatically optimized to approximate the image content of the challenging scenes as much as possible. The resulting synthetic images are again used for re-training of the neural network.

Instead of creating new sets of training images with the help of the synthetic training data apparatus 10 at a clinical site from scratch, the system can use a database of already created synthetic training images. From this database those images which fit to the clinical workflow at the clinical site are selected with increased likelihood. A retraining is done with this new distribution of the images.

Therefore, steps i) and ii) shown in Fig. 7 may be repeated during a plurality of exam preparations to determine a plurality of body poses of one or more human subjects, a plurality of image characteristics, a plurality of person characteristics of one or more human subjects, and/or a plurality of local exam preparation characteristics. New synthetic training data may be generated based on one or more of: the plurality of body poses of one or more human subjects, the plurality of image characteristics, the plurality of person characteristics of the one or more human subjects, and the plurality of local exam preparation characteristics. The new synthetic training data may be used for re-training the data-driven model.

In some implementations, the image data acquired by the at least one sensor at a clinical site may comprise depth image data. Accurate volume estimation of the body skin surface of human subjects from depth images is a difficult task. 3D depth-sensing cameras typically operate in the optical or near infrared range and can be used to measure the surface facing towards the camera. Depth sensing cameras cannot measure through most clothes, objects or other obstructions that are opaque at the given wavelength. Similarly, the contralateral surface of the body facing away from the camera cannot be measured. The signal from the front-facing surface pointing towards the camera contains signal from all reflective parts exposed to the camera line-of-sight incl. all obstructions and also self-obstructions. A typical target environment where detection of the actual body skin surface is relevant would be a medical imaging environment like e.g. for an MRI scanner. In such an environment, the human subject could be the patient wearing clothes or hospital garment and being covered by MR receive coils and accessories required to perform the examination. The environment could also involve the operator being busy with or even carrying parts of the equipment or even moving parts of the imaging system itself (e.g., pumps, monitoring equipment, X-ray c-arc). In such a complex, yet very typical real-world scene, consequently even the surface facing the camera is strongly corrupted by artifacts and reconstruction of the body skin surface is very challenging. Correct estimation of the body skin surface is relevant for adjusting examination parameters like dose, SAR, FOV (incl. fold-over compensation strategies), patient size, weight.

According, there may be a need to clean contaminated raw signals from typical depth-ranging sensors to obtain the actual body skin surface. To estimate the body skin surface from a depth camera image, the obstructions need to be detected and removed and the backside needs to be completely reconstructed from the available information of the front side surface irrespective of the contaminations and obstructions hiding the skin surfaces.

It is proposed to simulate human body shapes, poses and obstructions to generate virtual scenes to cover the expected distribution in the intended target domain. Turning back to Fig. 1, as described above, the dataset of virtual human subject provided at block 110 comprises a plurality of 3D virtual human subjects generated by a parametric model of a human body shape. At block 120, a virtual human subject is selected and a pose is generated for the selected virtual human subject. In this step, an actual ground truth body skin surface may be calculated for the front-face and the back-face as two depth images. In the step of generating the virtual scene at block 160, the training images are calculated from the body skin surface model by adding obstructions and calculation of the contaminated surface facing the camera. Additionally, during training, augmentation schemes may be applied such as most common ones like noise, typical sensor artefacts, clothes, hair, objects/accessories and other random distortions. Additionally, even after rendering of the depth images from the body models, randomly shaped objects can be added to foreground and background by simple calculus since the distance of the body skin surface from the camera plane is exactly known. Clothing e.g. has a variable yet non-vanishing correlation to the skin and lateral body extent and therefore can be very effectively randomized. Position, shape, size, and reflectivity of objects may be uncorrelated and adapted to the problem.

In some implementations, the body surface ground truth may be represented at a different resolution than the input image e.g. by corresponding body surface keypoints in 3D (e.g. knee front keypoint and corresponding knee back keypoint). The number and location of such keypoints can be chosen independently of the image resolution. Typical correspondences can be along local patient coordinate dimensions like AP and LR, any linear combination thereof or can also be freely defined. This allows to further reduce the task complexity and to adapt the data-driven model to the specific problem, e.g., if subparts of the body or specific anatomical details need to be inferred with different accuracies.

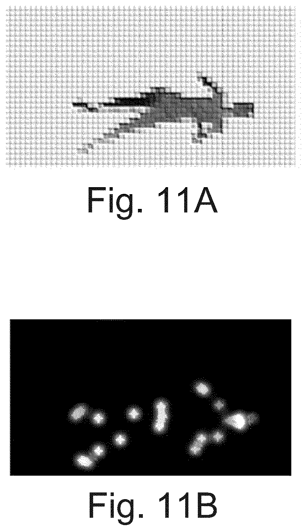

For example, Fig. 11A illustrates a surface representation of a virtual human subject using a lower resolution. Fig. 11B illustrates a set of corresponding 3D body surface keypoins on an irregular grid. In Figs. 11A and 11B, image/heatmap representation of the 3D coordinates are illustrated. Alternatively, 3D keypoint coordinates may be used directly

The generated virtual scene is provided to the training dataset. For training the data-driven model, the contaminated front face is used as input and the pair of body skin surfaces facing towards and away from the camera as target output.

After the training phase, the body keypoint detection apparatus 20 may apply the trained data-driven model to perform the steps shown in Fig. 7. At block 210, depth image data acquired by at least one depth sensor at a clinical site is provided. The raw, contaminated depth image data is provided to the trained data-driven model at block 210 to output a pair of body skin surfaces facing towards and away from the at least one depth sensor. The pair of body skin surfaces may be used to calculate a full body surface and/or to calculate biometric parameters, such as weight, height, and thickness of body parts.

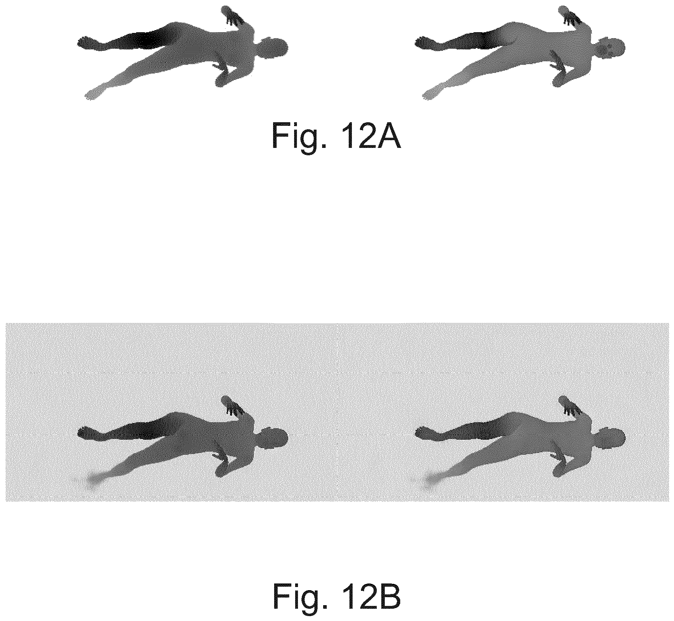

Fig. 12A illustrates a ground truth body skin surface calculated for the front-face (left) and the back-face (right) as two depth images from a virtual human subject. Fig. 12B illustrates the output of the data-driven model using obstructed front face as input. The output comprises a pair of body skin surfaces including a front-face (left) facing towards and a back-face (right) away from the at least one depth sensor. As shown, the body keypoint detection apparatus 10 cleans contaminated raw signals from typical depth-ranging sensors and provides correct estimation of the body skin surface.

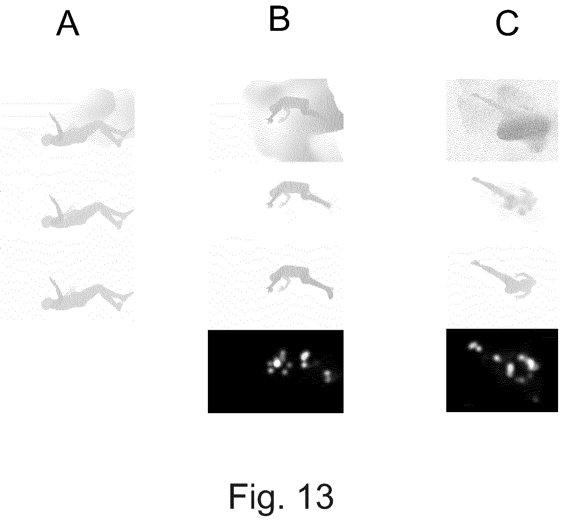

In some implementations, a combination of the surface reconstruction with a supporting learning target involving e.g. a keypoint heatmap RMSE loss may be used to optimize the performance when body shape and poses variation is large and obstructions are very strong or contaminating larger parts of the body. For example, Fig. 13 illustrates exemplary steps towards the reconstruction of the front face despite noise and obstructions. The first row illustrate three exemplary contaminated depth images as input to the data-driven model. The second row illustrates that non-human signal is removed in all image regions. The third row illustrates the corresponding ground truth body surfaces. The fourth row illustrates that adding a highly critical loss (e.g. via body keypoint heatmaps) and learning keypoint detection and surface reconstruction simultaneously can strongly contribute to the performance of the body surface reconstruction capability of the neural network especially in advanced poses and severe obstructions shown in column C.

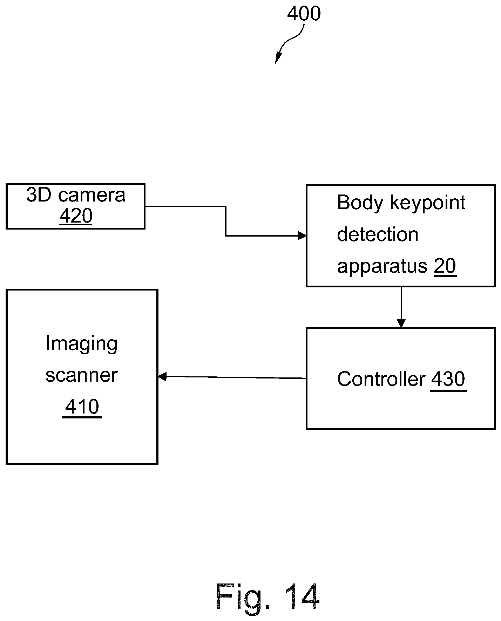

Fig. 14 illustrates an exemplary system 400. The exemplary system 400 comprises the body keypoint detection apparatus 20 disclosed herein, an image scanner 410, a 3D camera 420, and a controller 430.

The imaging scanner 410 is configured to acquire image data of a patient. The imaging scanner may be a Magnetic Resonance (MR), Computed Tomography (CT), Digital X-ray Radiogrammetry (DXR), Linac or other imaging scanner.

The 3D camera 420 is configured to capture 3D image data. The 3D camera may be mounted to a medical imaging system such that the relation between their coordinate systems is always known at any time point. The 3D camera may be mounted such that the patient area or patient subarea of interest is ideally centred and fully covered in the FOV. For symmetry reasons, a typical preferred mounting location for an MRI or CT system would be at the ceiling, centred over the patient table, facing straight down, or near the X-ray tube of a DXR system.

The controller 430 is configured to generate a control signal usable for adjusting imaging parameter of the imaging scanner 410. In an example, the controller 430 may be embodied in an operator console, e.g., as a software residing in the operator console.

In operation, the image data from the 3D camera 420 is sent to the body keypoint detection apparatus 20 which determines the body skin surface and provide an estimation of body area for determining body keypoints. In some implementations, the body keypoint detection apparatus 20 may be configured to determine biometric parameters based on the determined body skin surface. In some implementations, the body keypoint detection apparatus 20 may be configured to identify one or more body interior anatomies based on the determined body skin surface. For example, a 3D articulated human model can be fitted to the noise reduced body surface estimations (e.g. cleaned front side observation together with the learned back side observation), which enables a connection between the body surface and the body interior anatomy. In some implementations, the body keypoint detection apparatus 20 may be further configured to estimate unsafe scanning situation, e.g., skin contact to body coils, based on the determined body skin surface. In some implementations, based on the determined body skin surface and the image data, the body keypoint detection apparatus 20 may be further configured to estimate body collision or proximity risk with parts of the equipment (e.g., table, gantry, trolley, etc.).

The body keypoint detection apparatus 20 may provide the calculated body skin surface and biometric parameters to the controller 430, which may use these parameters to adjust imaging parameters of the imaging scanner 410, such as FOV, fold-over suppression, dose/SAR, collimation, etc.

Optionally, a feedback system may be provided combining the depth images with the medical images. For example, the feedback system may compare prediction of the data-driven model at the measured body part(s). For example, the feedback system may automatically collecting depth data with body part dimensions. For example, the feedback system may refine simulations using the synthetic training data generating apparatus 10 based on observed cases with larger deviations. For example, the feedback system may analyze the actual imaging parameters and the resulting scanning parameters and images and compares the predictions with the actual values to spot deviations. If such a deviation is found the correct parameters and the depth images can be stored.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

## Claims

1. A computer-implemented method (100) for generating synthetic training data that is usable for training a data-driven model for body keypoint detection, the method comprising:
a) providing (110) a dataset of virtual human subjects, wherein each virtual human subject is generated by a parametric model of a human body shape, which comprises a plurality of body parameters defining a body surface and a skeleton of the virtual human subjects;
b) selecting (120) a virtual human subject from the dataset of the virtual human subjects and generating a pose for the selected virtual human subject;
c) attaching (130) a plurality of annotated keypoints to the body surface and/or the skeleton of the selected virtual human subject, wherein each annotated keypoint comprises a label indicative of a position of said keypoint;
d) providing (140) at least one background image;
e) generating (150) a virtual scene that comprises a camera, at least one light source, the at least one background image, and the selected virtual human subject with the plurality of annotated keypoints, wherein the virtual scene comprises a plurality of scene parameters defining a position and/or orientation of the selected virtual human subject relative to the camera and/or a lighting condition; and
f) providing (160) the generated virtual scene to a training dataset that is usable for training the data-driven model for body keypoint detection.

2. The computer-implemented method according to claim 1,
wherein step c) further comprises adding at least one graphical asset, which is visible on or in regards to the parametric model of a human body shape, to the selected virtual human subject.

3. The computer-implemented method according to claim 1 or 2,
wherein step c) further comprises adding at least one object that hides the selected virtual human subject partially.

4. The computer-implemented method according to any one of the preceding claims, wherein the step of generating a pose for the selected virtual human subject comprises:
- determining, for each joint of the skeleton, an anatomically possible range of motion; and
- generating, within a constraint of the anatomically possible range of motion of each joint of the skeleton, an actual joint angle for one or more joints of the skeleton randomly to generate the pose of the selected virtual human subject.

5. The computer-implemented method according to claim 4,
wherein the actual joint angle for one or more joints of the skeleton is generated randomly with a uniform distribution; or
wherein in step c) the generated pose comprises one or more typical poses of a human subject on a scanner table in a medical imaging environment, and the actual joint angle for one or more joints of the skeleton is generated randomly with a probability distribution that has a peak around a joint position in the one or more typical poses.

6. The computer-implemented method according to any one of the preceding claims,
wherein the body surface and/or the skeleton of the selected virtual human subject is represent at a plurality of different resolutions.

7. The computer-implemented method according to any one of the preceding claims, further comprising:
- repeating steps c) to f) to provide a plurality of virtual scenes to the training dataset.

8. A computer-implemented method (200) for body keypoint detection, the method comprising:
i) providing (210) image data acquired by at least one sensor at a clinical site;
ii) providing (220) a data-driven model to identify at least one human subject in the provided image data, to determine one or more keypoints associated with a body surface and/or a skeleton of the at least one identified human subject, and to generate a label that describes a keypoint position of the one or more determined keypoints, wherein the data-driven model has been trained on a training dataset that comprises synthetic training data generated according to any one of the preceding claims.

9. The computer-implemented method according to claim 8, further comprising one or more of the following steps:
- determining, based on the generated label, a body pose of the at least one identified human subject;
- determining, based on the image data, an image characteristic of the image data;
- obtaining at least one person characteristic of the at least one identified human subject; and
- determining, from the image data, a local exam preparation characteristic that comprises one or more of: an accessory required to be carried by the at least one human subject, an equipment carried by an imager operator, and a moving part of an imaging system.

10. The computer-implemented method according to claim 9, further comprising:
- repeating steps i) and ii) during a plurality of exam preparations to determine a plurality of body poses of one or more human subjects, a plurality of image characteristics, a plurality of person characteristics of one or more human subjects, and/or a plurality of local exam preparation characteristics; and
- generating new synthetic training data based on one or more of: the plurality of body poses of one or more human subjects, the plurality of image characteristics, the plurality of person characteristics of the one or more human subjects, and the plurality of local exam preparation characteristics, wherein the new synthetic training data is usable for re-training the data-driven model.

11. The computer-implemented method according to any one of claims 7 to 10, wherein the image data comprises depth image data that represents surface data representing an outer surface of the human subject facing the at least one sensor; and
wherein the data-driven model has been trained to determine further surface data representing an outer surface of the human subject facing away from the at least one sensor.

12. The computer-implemented method according to claim 11, further comprising:
- determining a full body surface based on the surface data representing an outer surface of the human subject facing the at least one sensor and the further surface data representing an outer surface of the human subject facing away from the at least one sensor; and
- determining, based on the full body surface, at least one biometric parameter of the at least one identified human subject.

13. The computer-implemented method according to claim 12, further comprising:
- generating, based on the full body surface and the at least one biometric parameter of the at least one identified human subject, control data usable to adjust at least one imaging parameter for acquiring a medical image of the at least one human subject.

14. The computer-implemented method according to claim 13, further comprising:
- providing the acquired medical image of the at least one human subject using the at least one adjusted imaging parameter;
- determining a deviation between the acquired medical image and the determined full body surface of the at least one identified human subject; and
- re-training the data-driven model, based on the determined deviation, to determine the further surface data representing an outer surface of the human subject facing away from the at least one sensor.

15. A computer-readable storage medium comprising instructions which, when the program is executed by a processing unit, cause the processing unit to carry out the steps of the method of claims 1 to 7 or the method of claims 8 to 14.
